# FASCICULE DE BREVET EUROPEEN

(11) **EP 3 003 750 B1**
(45) Date de publication et mention de la délivrance du brevet: **05.07.2017**
(21) Numéro de dépôt: 14736878.1
(22) Date de dépôt: 21.05.2014
(51) Int. Cl.: B60H 1/00, B60H 1/32

(54) **DISPOSITIF D'ESTIMATION INDIRECTE DE LA TEMPÉRATURE DANS UNE ENCEINTE REFROIDIE PAR UNE INSTALLATION DE CHAUFFAGE/CLIMATISATION**
VORRICHTUNG ZUR INDIREKTEN ERMITTLUNG DER TEMPERATUR IN EINEM DURCH EINE HEIZ-/KLIMATISIERUNGSVORRICHTUNG GEKÜHLTEN GEHÄUSE
DEVICE FOR INDIRECTLY ESTIMATING THE TEMPERATURE IN AN ENCLOSURE COOLED BY A HEATING/AIR-CONDITIONING APPARATUS

(30) Priorité: 28.05.2013 FR 1354803
(43) Date de publication de la demande: 13.04.2016
(73) Titulaire: Peugeot Citroën Automobiles SA, 78140 Vélizy Villacoublay (FR)
(72) Inventeur: TROUILLARD, Arnaud, F-75017 Paris (FR)
(86) Numéro de dépôt international: PCT/FR2014/051184
(87) Numéro de publication internationale: WO 2014/191658

(56) Documents cités:
- EP-A1- 2 221 198
- EP-A2- 1 116 612
- EP-A2- 1 413 463

## Description

L'invention concerne les installations de chauffage/climatisation destinées à alimenter en air traité une enceinte et comprenant un volet d'alimentation destiné à les alimenter en air extérieur et/ou en air recyclé (ou recirculé) issu de cette enceinte.

Cette invention concerne tout système comprenant au moins une enceinte devant être alimentée en air traité par une installation de chauffage/ climatisation, et notamment les véhicules, éventuellement de type automobile, et les bâtiments.

Certaines installations de chauffage/climatisation comprennent au moins :
- un volet d'alimentation propre à contrôler leur alimentation en air extérieur et/ou en air recyclé issu d'une première zone de l'enceinte associée,
- un évaporateur propre à refroidir l'air d'alimentation pour produire de l'air refroidi destiné à des bouches de distribution de l'enceinte, et
- des volets d'admission propres à contrôler l'accès aux bouches de distribution.

Le pré-conditionnement thermique d'une enceinte lorsque l'air extérieur est chaud, voire très chaud, est une fonction qui est habituellement appréciée par les personnes lorsqu'elles pénètrent dans cette enceinte. C'est tout particulièrement le cas lorsque le pré-conditionnement thermique consiste en un refroidissement permettant aux futurs passagers d'un véhicule de disposer d'un habitacle refroidi au moment où ils entreront dans ce dernier, c'est-à-dire avant que le groupe motopropulseur du véhicule n'ait été mis en fonctionnement. Cette fonction de pré-refroidissement peut résulter de la programmation d'une heure de prise en main du véhicule, ou d'une demande déclenchée par l'actionnement d'une télécommande, ou encore d'une déduction faite par le calculateur qui gère l'installation, par apprentissage des habitudes du conducteur du véhicule.

Pour que le pré-conditionnement thermique précité soit réalisé de façon efficace il faut que le calculateur précité dispose de la valeur précise de la température régnant dans l'enceinte (par exemple l'habitacle). Cela lui permet en effet non seulement de déterminer le nombre minimal de frigories qui doivent être diffusées dans l'habitacle pour offrir un confort acceptable, sans que cela n'induise un refroidissement excessif de l'habitacle synonyme d'une dépense d'énergie inutile, mais également de disposer, lors des phases d'initialisation effectuées au démarrage du véhicule, d'un historique de la température dans l'habitacle, lorsque l'installation dispose d'un mode de fonctionnement automatique.

Comme le sait l'homme de l'art, on peut déterminer la (première) température dans une enceinte d'au moins deux façons. Une première façon consiste à utiliser un capteur de température implanté dans l'enceinte pour effectuer des mesures directes sur l'air qui est contenu dans cette enceinte. Une seconde façon consiste à effectuer une estimation via un bilan énergétique réalisé à partir de données et de mesures de variables effectuées par des capteurs externes à l'enceinte (comme par exemple la température extérieure, la température de l'air traité qui sort de l'installation, et la puissance solaire reçue par l'enceinte).

Ces deux façons présentent chacune des inconvénients. En effet, la mesure directe de la température dans l'enceinte nécessite un capteur de température assez onéreux du fait qu'il doit être associé à un système de ventilation pour être correctement irrigué, et un lieu d'implantation du capteur suffisamment représentatif de l'enceinte, et donc potentiellement nuisible au style intérieur de cette enceinte. De son côté, la mesure indirecte par estimation via un bilan énergétique nécessite l'accès à de nombreuses informations, ce qui n'est pas toujours possible ou bien s'avère délicat, notamment dans le cas de la température de l'air traité sortant de l'installation. Cette dernière température nécessite en effet un capteur indiquant soit directement la température de l'air traité sortant de l'installation, soit la quantité d'énergie qui a été absorbée dans l'air recyclé par l'évaporateur. En outre, la disponibilité des nombreuses informations, nécessaires à la réalisation du bilan énergétique, nécessite que de nombreux calculateurs soient actifs, ce qui entraîne une surconsommation d'énergie électrique et impose que ces calculateurs soient capables de fonctionner pendant des durées plus longues.

Les documents EP2221198 et EP11116612 divulguent de telles installations de chauffage/climatisation de l'état de l'art.

L'enseignement du document EP2221198 correspond au préambule de la revendication 1.

L'invention a donc pour but d'améliorer la situation.

Elle propose notamment à cet effet un dispositif conforme à la partie caractérisante de la revendication 1.

On dispose ainsi, par mesure indirecte, d'une estimée assez fiable de la première température de l'air dans l'enceinte, sans utiliser de capteur additionnel dans l'habitacle et sans avoir à effectuer un bilan énergétique.

Le dispositif d'estimation selon l'invention peut comporter d'autres caractéristiques qui peuvent être prises séparément ou en combinaison, et notamment :
- lorsque l'installation de chauffage/climatisation comprend en outre des moyens de chauffage, propres à réchauffer l'air refroidi pour alimenter en air réchauffé une chambre de mixage destinée à alimenter en air traité les bouches de distribution, et des moyens de mixage, propres à contrôler la répartition de l'air refroidi entre la chambre de mixage et les moyens de chauffage, ses moyens de contrôle peuvent être également agencés pour ordonner un placement des moyens de mixage dans une position dans laquelle ils alimentent la chambre de mixage avec l'intégralité de l'air recyclé et refroidi ;
- ses moyens de contrôle peuvent être agencés pour ordonner des placements des volets d'admission dans des positions respectives permettant l'alimentation exclusive de bouches de distribution dédiées au dégivrage et/ou de bouches de distribution dédiées à l'aération centrale de l'enceinte ;
- ses moyens de contrôle peuvent être agencés pour assimiler la première température à la seconde température mesurée consécutivement aux placements ;
- en variante, ses moyens de contrôle peuvent être agencés pour estimer la première température en effectuant une soustraction entre la seconde température, mesurée consécutivement aux placements, et une valeur choisie ;
   ➢ ses moyens de contrôle peuvent être agencés pour choisir la valeur en fonction d'une troisième température d'un air régnant à l'extérieur de l'enceinte. En variante, ses moyens de contrôle peuvent être agencés pour utiliser une valeur choisie prédéfinie ;
- ses moyens de contrôle peuvent être agencés pour estimer la première température pendant une phase de pré-refroidissement de l'enceinte ;
- il peut comprendre un capteur de température propre à mesurer la seconde température de l'air d'alimentation entre le volet d'alimentation et l'évaporateur.

L'invention propose également un calculateur, destiné à équiper une installation de chauffage/climatisation devant alimenter une enceinte en air traité, et comprenant des moyens de contrôle d'un dispositif d'estimation du type de celui présenté ci-avant.

L'invention propose également une installation de chauffage/ climatisation propre à alimenter en air traité une enceinte et comprenant au moins :
- un volet d'alimentation propre à contrôler son alimentation en air extérieur et/ou air recyclé issu d'une première zone de l'enceinte,
- un évaporateur propre à refroidir l'air d'alimentation pour produire de l'air refroidi destiné à des bouches de distribution de l'enceinte,
- des volets d'admission propres à contrôler l'accès à ces bouches de distribution, et
- un calculateur du type de celui présenté ci-avant.

L'invention propose également un véhicule, éventuellement de type automobile, et comprenant une installation de chauffage/climatisation du type de celle présentée ci-avant.

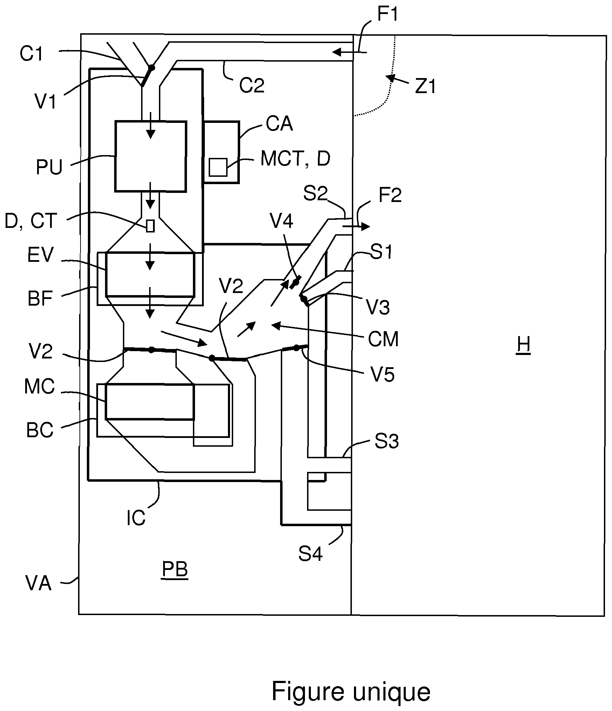

D'autres caractéristiques et avantages de l'invention apparaîtront à l'examen de la description détaillée ci-après, et du dessin annexé, sur lequel l'unique figure illustre schématiquement une installation de chauffage/ climatisation de véhicule automobile couplée à un calculateur comportant un exemple de réalisation d'un dispositif d'estimation selon l'invention.

L'invention a pour but de proposer un dispositif d'estimation D destiné à fournir des estimations de température d'enceinte à un calculateur CA gérant une installation de chauffage/climatisation IC d'un système VA comprenant au moins une enceinte H.

Dans ce qui suit, on considère, à titre d'exemple non limitatif, que l'installation de chauffage/climatisation IC fait partie d'un système VA agencé sous la forme d'un véhicule automobile, comme par exemple une voiture. L'enceinte du véhicule VA est donc ici son habitacle H. Mais l'invention n'est pas limitée à ce type de système. Elle concerne en effet tout type de véhicule terrestre, maritime (ou fluvial), ou aérien, et tout type de bâtiment, dès lors qu'il comprend au moins une enceinte destinée à être alimentée en air traité par une installation de chauffage/climatisation.

On a schématiquement et fonctionnellement représenté sur l'unique figure une installation de chauffage/climatisation IC, ici installée sous une planche de bord PB d'un véhicule VA.

Cette installation (de chauffage/climatisation) IC comprend notamment un pulseur (ou groupe moto-ventilateur (ou GMV)) PU, une boucle froide (ou boucle de climatisation) BF, un volet d'alimentation (ou d'entrée d'air) V1 et des volets d'admission V3-V5.

On notera que dans l'exemple non limitatif illustré, l'installation IC comprend également une boucle chaude (ou boucle de chauffage) BC et des moyens de mixage V2. Cela résulte du fait qu'elle est ici adaptée non seulement à la climatisation (ou au refroidissement) de l'habitacle H, mais également au chauffage de ce dernier (H). Mais cela n'est pas obligatoire. En effet, elle pourrait n'être adaptée qu'au seul refroidissement d'une enceinte.

Le pulseur PU est alimenté en air extérieur et/ou en air recyclé (ou recirculé) par le volet d'alimentation (ou d'entrée d'air) V1. L'air extérieur est issu d'un premier conduit C1 et l'air recyclé est issu d'une première zone Z1 de l'habitacle H via un second conduit C2 (flèche F1). Le débit d'air fourni par le pulseur PU dépend du niveau de puissance qui a été automatiquement calculé par le calculateur CA ou bien choisi (et éventuellement programmé) par un passager du véhicule VA au moyen d'un organe de commande qui est installé dans l'habitacle H, généralement dans la planche de bord.

On notera que dans l'exemple non limitatif illustré, la première zone Z1 est celle qui est destinée à recevoir les pieds de l'un au moins des passagers avant, et donc qui est située devant l'un au moins des sièges avant et sous la planche de bord du véhicule VA.

La position du volet d'alimentation V1, et donc les proportions d'air extérieur et d'air recyclé qui alimentent l'installation IC (et ici son pulseur PU), est/sont contrôlé(e)s par un calculateur CA sur lequel on reviendra plus loin.

La boucle froide BF est alimentée en air par le pulseur PU. Elle comporte notamment un évaporateur EV (traversé par l'air qui est issu du pulseur PU), ainsi qu'un compresseur électrique (éventuellement basse tension), un condenseur et un circuit dans lequel circule un fluide frigorigène et qui est couplé à l'évaporateur EV, au compresseur et au condenseur. Ce fluide frigorigène, qui circule en circuit fermé dans le circuit dans différentes phases, est, par exemple, un HFC (ou un autre réfrigérant fluoré) ou du dioxyde de carbone.

La sortie de l'évaporateur EV est couplée à un conduit qui alimente ici au moins, d'une part, une chambre de mixage CM présentant une première entrée dont l'accès est contrôlé par des moyens de mixage V2 (par exemple un volet comportant une partie ou deux parties (comme illustré)), et, d'autre part, la boucle chaude BC dont l'accès est éventuellement contrôlé par les moyens de mixage V2 et dont la sortie alimente une seconde entrée de la chambre de mixage CM.

La boucle chaude BC (optionnelle) est destinée à chauffer l'air qui est issu (ici) de l'évaporateur EV et qui est destiné à l'habitacle H du véhicule VA, éventuellement après un mélange avec de l'air refroidi présent dans la chambre de mixage CM et issu de l'évaporateur EV. Elle comprend des moyens de chauffage MC comportant, par exemple, un aérotherme, comme par exemple un échangeur de chaleur (dans lequel circule un liquide qui est éventuellement chauffé par des résistances électriques de chauffage (par exemple de type CTP haute tension), ou par un réchauffeur à combustion thermique), et/ou un radiateur électrique, par exemple constitué de résistances électriques de chauffage (par exemple de type CTP haute tension).

Ces moyens de chauffage MC sont chargés, lorsqu'ils fonctionnent, de réchauffer l'air qui les traverse et qui est issu (ici) de l'évaporateur EV, afin de délivrer de l'air réchauffé sur la sortie qui alimente la seconde entrée de la chambre de mixage CM.

La chambre de mixage CM est connectée à des conduits qui sont, ici, destinés à alimenter des bouches de distribution placées dans l'habitacle H du véhicule VA et dédiées au dégivrage S1 (bas du pare-brise), à l'aération centrale S2 (façade avant de la planche de bord), aux pieds avant S3 (dans la première zone Z1) et aux pieds arrière S4. L'accès à ces conduits est contrôlé par des volets d'admission V3 à V5. On notera que le volet d'admission V5 contrôle ici l'accès à un conduit qui alimente les bouches de pieds avant S3 et de pieds arrière S4. Mais on pourrait prévoir deux volets d'admission pour contrôler les accès respectivement aux bouches de pieds avant S3 et bouches de pieds arrière S4. On notera que ces différents volets d'admission V3 à V5 sont généralement couplés entre eux par une cinématique qui est par exemple mue par un ou deux micromoteurs.

Les positions respectives des volets d'admission V3 à V5 dépendent des bouches de distribution au niveau desquelles un passager du véhicule VA souhaite que l'air traité, issu de l'installation IC, soit délivré. Ces bouches de distribution peuvent être choisies par le passager au moyen d'au moins un organe de commande installé dans l'habitacle H, généralement dans la planche de bord.

Les moyens de mixage V2 sont destinés à contrôler la répartition de l'air, qui est fourni par le volet d'alimentation V1 et qui a traversé l'évaporateur EV, entre la chambre de mixage CM et les moyens de chauffage MC. Ils permettent donc de mélanger (ou mixer) de façon contrôlée une partie de l'air qui a traversé la boucle froide BF et l'air qui a traversé l'éventuelle boucle chaude BC. Sa position dépend du mode de fonctionnement de l'installation IC qui a été choisi (et éventuellement programmé) par un passager du véhicule VA au moyen d'un organe de commande installé dans l'habitacle H, généralement dans la planche de bord.

Le fonctionnement de l'installation IC, et en particulier de son pulseur PU, de sa boucle froide BF, de son éventuelle boucle chaude BC, de son volet d'alimentation V1, de ses moyens de mixage V2 et de ses volets d'admission V3 à V5, est contrôlé par le calculateur CA.

On notera que l'installation IC pourrait présenter une architecture sensiblement différente, notamment lorsqu'elle fonctionne en tant que pompe à chaleur réversible.

Le dispositif d'estimation D, selon l'invention est destiné à estimer une première température régnant dans l'habitacle H de façon indirecte, c'est-à-dire sans capteur de température dans l'habitacle H. Il comprend au moins des moyens de contrôle MCT.

Dans l'exemple non limitatif illustré sur l'unique figure, les moyens de contrôle MCT du dispositif d'estimation D font partie du calculateur CA. Mais cela n'est pas obligatoire. Ils pourraient en effet faire partie d'un équipement couplé au calculateur CA, directement ou indirectement. Ils pourraient également être implantés dans un autre calculateur que celui qui gère l'installation CA. Ces moyens de contrôle MCT du dispositif d'estimation D peuvent être réalisés sous la forme de modules logiciels (ou informatiques ou encore « software »), ou bien d'une combinaison de circuits électroniques (ou « hardware ») et de modules logiciels.

Les moyens de contrôle MC sont agencés pour ordonner, d'une part, le placement du volet d'alimentation V1 dans une position dans laquelle il alimente l'installation IC en air exclusivement recyclé, et, d'autre part, le placement des moyens de mixage V2 dans une position dans laquelle ils alimentent la chambre de mixage CM uniquement avec de l'air qui a traversé la boucle froide BF, sans avoir traversé l'éventuelle boucle chaude BC. Par ailleurs, les moyens de contrôle MC sont agencés pour ordonner le placement des volets d'admission V3 à V5, dans une position dans laquelle ils alimentent des bouches de distribution qui sont éloignées de la première zone Z1.

Les moyens de contrôle MC sont également agencés, une fois qu'au moins les placements précités ont été réalisés, pour estimer la première température (de l'air dans l'habitacle H) à partir d'une seconde température (de l'air d'alimentation) qui a été mesurée entre le volet d'alimentation V1 et l'évaporateur EV par un capteur CT consécutivement aux placements précités.

Ce capteur de température CT, qui est propre à mesurer la seconde température de l'air d'alimentation, qui est présent entre le volet d'alimentation V1 et l'évaporateur EV et qui est issu du volet d'alimentation V1, peut éventuellement faire partie du dispositif D. Sinon, il (CT) fait partie de l'installation IC.

On notera que dans l'exemple non limitatif illustré sur l'unique figure, le capteur CT est installé entre la sortie du pulseur PU et l'entrée de l'évaporateur EV. Mais il pourrait être installé entre la sortie du volet d'alimentation V1 et l'entrée du pulseur PU.

Dans l'exemple qui est ici décrit (où la première zone Z1 est propre à recevoir des pieds de passagers), les moyens de contrôle MCT sont agencés pour ordonner le placement des volets d'admission V3 à V5 dans des positions respectives qui permettent l'alimentation exclusive des bouches de distribution S1 et/ou des bouches de distribution S2. On notera que dans l'exemple illustré les moyens de contrôle MCT ne sont agencés que pour ordonner le placement des volets d'admission V3 à V5 dans des positions respectives qui permettent l'alimentation exclusive des bouches de distribution S2. Mais dans des variantes de réalisation non illustrées, ils pourraient être agencés pour ordonner le placement des volets d'admission V3 à V5 dans des positions respectives qui permettent l'alimentation exclusive des bouches de distribution S1, ou bien à la fois des bouches de distribution S1 et des bouches de distribution S2.

La diffusion de l'air traité (refroidi) par les bouches de distribution S2 (flèche F2) et/ou les bouches de distribution S1 est nécessaire pour aboutir à une estimation indirecte fiable de la température de l'habitacle H. Le principe est de diffuser l'air refroidi dans l'habitacle H, via des bouches d'admission qui sont éloignées de la première zone Z1 où est ici aspiré l'air recyclé qui alimente le pulseur PU (flèche F1), à savoir l'une au moins des caves à pieds des passagers avant du véhicule VA. On évite donc ainsi de ré-aspirer dans l'installation IC de l'air qu'elle vient tout juste de traiter et de réinjecter dans l'habitacle H (flèche F2) et dont la température serait sensiblement plus froide que dans le reste de l'habitacle H.

On notera que la diffusion par les bouches de distribution S2 est à ce jour privilégiée car elle permet une diffusion plus homogène de l'air dans l'habitacle H (et notamment d'irriguer plus facilement les places arrières du véhicule VA), et évite les phénomènes d'embuage externe sur le pare-brise qui peuvent apparaître lorsque la température et l'humidité de l'air extérieur sont élevées, et lorsque l'on souffle de l'air froid sur le pare-brise.

On notera que si la première zone Z1 était définie ailleurs que dans l'espace dédié aux pieds avant, par exemple au-dessus de la planche de bord, les moyens de contrôle MCT ordonneraient le placement des volets d'admission V3 à V5 dans des positions respectives permettant l'alimentation exclusive d'autres bouches de distribution que les bouches de distribution S1 et S2, et par exemple les bouches de distribution S3 et/ou S4.

On comprendra que lorsque l'installation IC fonctionne en mode d'air recyclé issu de la première zone Z1 et que l'évaporateur EC fonctionne et alimente exclusivement la chambre de mixage CM, la seconde température de l'air recyclé qui va alimenter l'évaporateur EV est similaire à la première température que présente l'air dans l'habitacle H à distance des endroits où l'air traité (refroidi) débouche.

On entend ici par « similaire », le fait d'être égal, ou quasiment égal, ou encore égal à une valeur près.

La première température peut être estimée d'au moins deux façons.

Une première façon consiste à faire assimiler, par les moyens de contrôle MCT, la première température à la seconde température qui a été mesurée consécutivement aux placements du volet d'alimentation V1 dans la position « air recyclé », des moyens de mixage V2 dans la position « tout refroidissement », d'au moins l'une des deux familles de bouches de distribution S1 et S2 en position ouverte (ici S2), et des autres bouches de distribution, ici S1, S3 et S4, en position fermée. La première température est donc ici égale à la seconde température.

Une seconde façon consiste à faire assimiler, par les moyens de contrôle MCT, la première température au résultat de la soustraction entre la seconde température (qui a été mesurée consécutivement aux placements du volet d'alimentation V1 dans la position « air recyclé », des moyens de mixage V2 dans la position « tout refroidissement », d'au moins l'une des deux familles de bouches de distribution S1 et S2 en position ouverte (ici S2), et des autres bouches de distribution, ici S1, S3 et S4, en position fermée), et une valeur choisie. La première température est donc ici égale à la seconde température moins la valeur choisie. On considère en effet ici que la température de l'air recyclé varie légèrement entre le moment où il quitte l'habitacle H par aspiration (flèche F1) et le moment où il se retrouve dans la zone du capteur CT (cette variation étant égale à la valeur choisie).

Au moins deux méthodes peuvent être envisagées pour choisir cette valeur.

Dans une première méthode, les moyens de contrôle MCT sont agencés pour choisir la valeur précitée en fonction d'une troisième température que présente l'air qui est situé à l'extérieur de l'habitacle H. On considère en effet ici que la température de l'air recyclé va varier en fonction de la température de l'air extérieur. Cette troisième température est mesurée par un capteur non représenté que comprend habituellement le véhicule VA, puis utilisée par le calculateur CA pour faire converger la première température vers une consigne définie par le conducteur du véhicule VA.

Dans une seconde méthode, les moyens de contrôle MCT sont agencés pour utiliser une valeur choisie qui a été prédéfinie en usine lors de tests. On considère en effet ici que la température de l'air recyclé varie de façon quasiment constante, indépendamment de la température de l'air extérieur.

On notera que les moyens de contrôle MCT sont préférentiellement agencés pour estimer la première température pendant chaque phase de pré-conditionnement thermique destinée à pré-refroidir l'habitacle H avant que des passagers ne l'occupent et donc lorsque le véhicule VA est inoccupé. Ce pré-refroidissement peut être déclenché par le calculateur CA en fonction d'une heure programmée d'arrivée de passager(s) dans l'habitacle H, ou d'une demande issue d'une télécommande associée au véhicule VA. Cette heure peut être programmée par le conducteur, ou bien déduite par le calculateur CA, par apprentissage des habitudes du conducteur.

Mais cela n'est pas obligatoire. En effet, les moyens de contrôle MCT pourraient également estimer la première température pendant certaines phases de refroidissement (ou climatisation) de l'habitacle H, c'est-à-dire lorsque le véhicule VA est occupé, sous réserve que le volet d'alimentation V1 soit placé dans la position « air recyclé », que les moyens de mixage V2 soient placés dans la position « tout refroidissement », qu'au moins l'une des deux familles de bouches de distribution S1 et S2 soit placée en position ouverte, et que les autres bouches de distribution, ici S3 et S4, soient placées en position fermée.

On notera que dans ce cas, les moyens de chauffage MC pourraient être en cours d'utilisation ou de fonctionnement. En effet, dès lors que les moyens de mixage V2 sont placés en position « tout refroidissement », les moyens de chauffage MC n'auront pas d'influence sur l'estimation.

On notera également que certains véhicules ne disposent pas de moyens de mixage V2. Dans ce cas, l'air passe dans tous les cas par le pulseur PU, puis par l'évaporateur, puis par l'échangeur de la boucle chaude BC. La température de l'air soufflé par les différentes bouches de distribution S1-S4, est alors gérée via la puissance à l'instant t de la boucle froide BF, et la puissance à l'instant t de la boucle chaude BC. Dans ce cas précis, il est alors nécessaire que les moyens de chauffage MC ne soient pas en cours d'utilisation et n'aient pas été utilisés dans les instants précédents pour pouvoir estimer la température de l'habitacle de manière indirecte, lorsque le véhicule VA est occupé.

Grâce à un contrôle des volets de l'installation, on peut désormais estimer assez précisément la température dans l'habitacle dans une phase de pure climatisation (ou refroidissement), en utilisant les mesures qui sont effectuées par un capteur placé en amont de l'évaporateur. On évite ainsi soit d'avoir à utiliser un capteur de température additionnel dans l'habitacle, soit d'avoir à réaliser des bilans énergétiques contraignants en termes de consommation d'énergie et de durée de vie de composants électroniques.

## Revendications

1. Dispositif (D) d'estimation d'une première température dans une enceinte (H) alimentée en air traité par une installation de chauffage/ climatisation (IC) comprenant un volet d'alimentation (V1) propre à contrôler son alimentation en air extérieur et/ou en air recyclé issu d'une première zone (Z1) de ladite enceinte (H), un évaporateur (EV) propre à refroidir l'air d'alimentation pour produire de l'air refroidi destiné à des bouches de distribution de ladite enceinte (H), et des moyens d'admission (V3-V5) propres à contrôler l'accès auxdites bouches de distribution, **caractérisé en ce qu'**il comprend des moyens de contrôle (MCT) agencés pour ordonner des placements dudit volet d'alimentation (V1) et desdits volets d'admission (V3-V5) dans des positions dans lesquelles ils alimentent respectivement ladite installation (IC) en air exclusivement recyclé et des bouches de distribution (S1, S2) éloignées de ladite première zone (Z1), puis pour estimer ladite première température à partir d'une seconde température de l'air d'alimentation mesurée entre ledit volet d'alimentation (V1) et ledit évaporateur (EV), consécutivement auxdits placements.

2. Dispositif selon la revendication 1, **caractérisé en ce que** ladite installation de chauffage/climatisation (IC) comprend en outre des moyens de chauffage (MC), propres à réchauffer ledit air refroidi pour alimenter en air réchauffé une chambre de mixage (CM) destinée à alimenter en air traité lesdites bouches de distribution, et des moyens de mixage (V2), propres à contrôler la répartition dudit air refroidi entre ladite chambre de mixage (CM) et lesdits moyens de chauffage (MC), lesdits moyens de contrôle (MCT) étant également agencés pour ordonner un placement desdits moyens de mixage (V2) dans une position dans laquelle ils alimentent ladite chambre de mixage (CM) avec l'intégralité de l'air recyclé et refroidi.

3. Dispositif selon l'une des revendications 1 et 2, **caractérisé en ce que** lesdits moyens de contrôle (MCT) sont agencés pour ordonner des placements desdits volets d'admission (V3-V5) dans des positions respectives permettant l'alimentation exclusive de bouches de distribution (S1) dédiées au dégivrage et/ou de bouches de distribution (S2) dédiées à l'aération centrale de ladite enceinte (H).

4. Dispositif selon l'une des revendications 1 à 3, **caractérisé en ce que** lesdits moyens de contrôle (MCT) sont agencés pour assimiler ladite première température à ladite seconde température mesurée consécutivement auxdits placements.

5. Dispositif selon l'une des revendications 1 à 3, **caractérisé en ce que** lesdits moyens de contrôle (MCT) sont agencés pour estimer ladite première température en effectuant une soustraction entre ladite seconde température, mesurée consécutivement auxdits placements, et une valeur choisie.

6. Dispositif selon l'une des revendications 1 à 5, **caractérisé en ce que** lesdits moyens de contrôle (MCT) sont agencés pour estimer ladite première température pendant une phase de pré-refroidissement de ladite enceinte (H).

7. Dispositif selon l'une des revendications 1 à 6, **caractérisé en ce qu'**il comprend un capteur de température (CT) propre à mesurer ladite seconde température de l'air d'alimentation entre ledit volet d'alimentation (V1) et ledit évaporateur (EV).

8. Calculateur (CA) pour une installation de chauffage/climatisation (IC) devant alimenter une enceinte (H) en air traité, **caractérisé en ce qu'**il comprend des moyens de contrôle (MCT) d'un dispositif d'estimation (D) selon l'une des revendications précédentes.

9. Installation de chauffage/climatisation (IC), propre à alimenter en air traité une enceinte (H) et comprenant au moins un volet d'alimentation (V1) propre à contrôler son alimentation en air extérieur et/ou en air recyclé issu d'une première zone (Z1) de ladite enceinte (H), un évaporateur (EV) propre à refroidir l'air d'alimentation pour produire de l'air refroidi destiné à des bouches de distribution de ladite enceinte (H), et des volets d'admission (V3-V5) propres à contrôler l'accès auxdites bouches de distribution, **caractérisée en ce qu'**elle comprend en outre un calculateur (CA) selon la revendication 8.

10. Véhicule (VA), **caractérisé en ce qu'**il comprend une installation de chauffage/climatisation (IC) selon la revendication 9.

## Patentansprüche

1. Vorrichtung (D) zum Schätzen einer ersten Temperatur in einem Einschluss (H), der mit Luft versorgt wird, die von einer Heiz-/Klimatisierungsanlage (IC) aufbereitet wurde, die eine Versorgungsklappe (V1) umfasst, die geeignet ist, um ihre Versorgung mit Außenluft und/oder mit recycelter Luft, die aus einer ersten Zone (Z1) des Einschlusses (H) stammt, zu steuern, einen Verdampfer (EV), der geeignet ist, um die Versorgungsluft zu kühlen, um gekühlte Luft zu erzeugen, die für Verteilungsöffnungen des Einschlusses (H) bestimmt ist, sowie Einlassmittel (V3-V5), die geeignet sind, um den Zugang zu den Verteilungsöffnungen zu steuern, **dadurch gekennzeichnet, dass** sie Steuermittel (MCT) umfasst, die eingerichtet sind, um Platzierungen der Versorgungsklappe (V1) und der Einlassklappen (V3-V5) in Positionen anzuordnen, in welchen sie jeweils die Anlage (IC) ausschließlich mit recycelter Luft versorgen, und Verteilungsöffnungen (S1, S2), die von der ersten Zone (Z1) entfernt sind, dann die erste Temperatur ausgehend von einer zweiten Temperatur der Versorgungsluft, die zwischen der Versorgungsklappe (V1) und dem Verdampfer (EV) im Anschluss an die Platzierungen gemessen wird, zu schätzen.

2. Vorrichtung nach Anspruch 1, **dadurch gekennzeichnet, dass** die Heiz-/Klimatisierungsanlage (IC) außerdem Heizmittel (MC) umfasst, die geeignet sind, um die gekühlte Luft aufzuwärmen, um eine Mischkammer (CM), die dazu bestimmt ist, die Verteilungsöffnungen mit aufbereiteter Luft zu versorgen, mit erwärmter Luft zu versorgen, und Mischmittel (V2), die geeignet sind, um die Verteilung der gekühlten Luft zwischen der Mischkammer (CM) und den Heizmitteln (MC) zu steuern, wobei die Steuermittel (MCT) auch eingerichtet sind, um eine Platzierung der Mischmittel (V2) in einer Position, in der sie die Mischkammer (CM) mit der gesamten recycelten und gekühlten Luft versorgen, anzuordnen.

3. Vorrichtung nach einem der Ansprüche 1 und 2, **dadurch gekennzeichnet, dass** die Steuermittel (MCT) eingerichtet sind, um Platzierungen der Einlassklappen (V3-V5) in jeweiligen Positionen, die das ausschließliche Versorgen von Verteilungsöffnungen (S1), die dem Entfrosten und/oder Verteilungsöffnungen (S2), die der zentralen Belüftung des Einschlusses (H) gewidmet sind, anzuordnen.

4. Vorrichtung nach einem der Ansprüche 1 bis 3, **dadurch gekennzeichnet, dass** die Steuermittel (MCT) eingerichtet sind, um die erste Temperatur mit der zweiten Temperatur, die im Anschluss an die Platzierungen gemessen wird, zu assimilieren.

5. Vorrichtung nach einem der Ansprüche 1 bis 3, **dadurch gekennzeichnet, dass** die Steuermittel (MCT) eingerichtet sind, um die erste Temperatur zu schätzen, indem eine Subtraktion zwischen der zweiten Temperatur, die im Anschluss an die Platzierungen gemessen wird, und einem ausgewählten Wert ausgeführt wird.

6. Vorrichtung nach einem der Ansprüche 1 bis 5, **dadurch gekennzeichnet, dass** die Steuermittel (MCT) eingerichtet sind, um die erste Temperatur während einer Vorkühlphase des Einschlusses (H) zu schätzen.

7. Vorrichtung nach einem der Ansprüche 1 bis 6, **dadurch gekennzeichnet, dass** sie einen Temperatursensor (CT) umfasst, der geeignet ist, um die zweite Temperatur der Versorgungsluft zwischen der Versorgungsklappe (V1) und dem Verdampfer (EV) zu messen.

8. Rechner (CA) für eine Heiz-/Klimatisierungsanlage (IC), die einen Einschluss (H) mit aufbereiteter Luft versorgen soll, **dadurch gekennzeichnet, dass** er Steuermittel (MCT) einer Schätzungsvorrichtung (D) nach einem der vorhergehenden Ansprüche umfasst.

9. Heiz-/Klimatisierungsanlage (IC), die geeignet ist, um einen Einschluss (H) mit aufbereiteter Luft zu versorgen und mindestens eine Versorgungsklappe (V1) umfasst, die geeignet ist, um ihre Versorgung mit Außenluft und/oder recycelter Luft, die aus einer ersten Zone (Z1) des Einschlusses (H) stammt, zu steuern, einen Verdampfer (EV), der geeignet ist, um die Versorgungsluft zu kühlen, um gekühlte Luft zu erzeugen, die für Verteilungsöffnungen des Einschlusses (H) bestimmt ist, und Einlassklappen (V3-V5), die geeignet sind, um den Zugang zu den Verteilungsöffnungen zu steuern, **dadurch gekennzeichnet, dass** sie außerdem einen Rechner (CA) nach Anspruch 8 umfasst.

10. Fahrzeug (VA), **dadurch gekennzeichnet, dass** es eine Heiz-/Klimatisierungsanlage (IC) nach Anspruch 9 umfasst.

## Claims

1. A device (D) for estimating a first temperature in an enclosure (H) supplied with air treated by a heating/air-conditioning apparatus (IC) including a supply valve (V1) suited to controlling its supply with exterior air and/or with recirculated air from a first zone (Z1) of said enclosure (H), an evaporator (EV) suited to cooling the supply air so as to produce cooled air intended for distribution ports of said enclosure (H), and intake means (V3-V5) suited to controlling access to said distribution ports, **characterized in that** it includes control means (MCT) arranged so as to order placements of said supply valve (V1) and of said intake valves (V3-V5) in positions in which they supply respectively said apparatus (IC) with exclusively recirculated air, and distribution ports (S1, S2) remote from said first zone (Z1), then for estimating said first temperature from a second temperature of the supply air measured between said supply valve (V1) and said evaporator (EV), consecutively to said placements.

2. The device according to Claim 1, **characterized in that** said heating/air-conditioning apparatus (IC) includes furthermore heating means (MC), suited to re-heat said cooled air for supplying with re-heated air a mixing chamber (CM) intended to supply with treated air the said distribution ports, and mixing means (V2), suited to controlling the distribution of said cooled air between said mixing chamber (CM) and said heating means (MC), said control means (MCT) being also arranged for ordering a placement of said mixing means (V2) in a position in which they supply said mixing chamber (CM) with all of the recirculated and cooled air.

3. The device according to one of Claims 1 and 2, **characterized in that** said control means (MCT) are arranged for ordering placements of said intake valves (V3-V5) in respective positions permitting the exclusive supply of distribution ports (S1) dedicated to de-icing, and/or of distribution ports (S2) dedicated to the central aeration of said enclosure (H).

4. The device according to one of Claims 1 to 3, **characterized in that** said control means (MCT) are arranged for assimilating said first temperature to said second temperature measured consecutively to said placements.

5. The device according to one of Claims 1 to 3, **characterized in that** said control means (MCT) are arranged for estimating said first temperature by carrying out a subtraction between said second temperature, measured consecutively to said placements, and a selected value.

6. The device according to one of Claims 1 to 5, **characterized in that** said control means (MCT) are arranged for estimating said first temperature during a pre-cooling phase of said enclosure (H).

7. The device according to one of Claims 1 to 6, **characterized in that** it includes a temperature sensor (CT) suited to measuring said second temperature of the supply air between said supply valve (V1) and said evaporator (EV).

8. A computer (CA) for a heating/air-conditioning apparatus (IC) for supplying an enclosure (H) with treated air, **characterized in that** it includes control means (MCT) of an estimation device (D) according to one of the preceding claims.

9. A heating/air-conditioning apparatus (IC), suited to supplying an enclosure (H) with treated air, and including at least one supply valve (V1) suited to controlling its supply with exterior air and/or with recirculated air from a first zone (Z1) of said enclosure (H), an evaporator (EV) suited to cooling the supply air so as to produce cooled air intended for distribution ports of said enclosure (H), and intake valves (V3-V5) suited to controlling access to said distribution ports, **characterized in that** it furthermore includes a computer (CA) according to Claim 8.

10. A vehicle (VA), **characterized in that** it includes a heating/air-conditioning installation (IC) according to Claim 9.
